# EUROPEAN PATENT APPLICATION

(11) **EP 2 136 337 A1**
(43) Date of publication of application: **23.12.2009**
(21) Application number: 08722859.9
(22) Date of filing: 26.03.2008
(51) Int. Cl.: G06T 11/60, H04N 1/387

(54) **ALBUM CREATING APPARATUS, METHOD, AND PROGRAM**

(30) Priority: 29.03.2007 JP 2007089630
(71) Applicant: Fujifilm Corporation, Tokyo 106-8620 (JP)
(72) Inventor: WATANABE, Kouichi, Ashigarakami-gun, Kanagawa 258-8538 (JP)
(74) Representative: Klunker . Schmitt-Nilson . Hirsch
(86) International application number: PCT/JP2008/055694
(87) International publication number: WO 2008/120630

(57) **Abstract**

Thumbnails of images including proper photographed dates are sorted for each image selection unit "days" and displayed on a display unit (15) of an album creating apparatus, and from the thumbnails sorted for each image selection unit "days", the user is made to select thumbnails of arbitrary images to be arranged for each page unit corresponding to the image selection unit. A processing unit (17) of the album creating apparatus stores images of each date designated by thumbnails in a storage unit (16) in response to the pressing of a "Finish" button. The processing unit (17) of the album creating apparatus then creates album data for arranging and printing the designated images of each date by the page unit and outputs the album data to a print output unit (13). The print output unit (13) prints the pages of the album based on the album data.

## Description

### Technical Field

The present invention relates to an apparatus, a method, and a program for creating output data of an album.

### Background Art

According to Patent Document 1, in an image recording reproducing apparatus constituted by an image photographing unit and an image storage and display unit, the image photographing unit includes means for providing auxiliary information to a photographic image, the information related to the image, when a photographic image is taken. Furthermore, the image storage and display unit includes means for performing display based on the auxiliary information when the photographic image is displayed. The image photographing unit implements a system in which a device such as a CCD (charge-coupled device) is used, without using a silver halide film, to import image information as electronic data. Forming the auxiliary information also as electronic data allows uniform handling. The image storage and display unit includes a storage unit of data to save image data and the like and includes an image display unit to electronically display an image in a form of album.

Patent Document 2 is constituted by comprising: image reading means for reading photographic data; input means for setting a photography group name, and inputting photographic data read by the image reading means as photography data belonging to the photography group; management means for managing the photographic data inputted by the input means by distinguishing to which photography group the photographic data belongs; and editing means for reading photographic data belonging to a designated photography group from the management means to display the photographic data on a display, describing photographic data to be posted in an electronic album based on pointer information, and using the photographic data to be displayed to edit the electronic album according to dialogue processing.

According to Patent Document 3, when a program is used on a personal computer to edit an electronic album, the number of images on an edited page in the electronic album is detected, an optimal layout is automatically selected according to the detected number of images, and the images are arranged according to the selected layout.
Patent Document 1: Japanese Patent Application Laid-Open No. 7-123307
Patent Document 2: Japanese Patent Application Laid-Open No. 9-305784
Patent Document 3: Japanese Patent Application Laid-Open No. 2006-74592

### Disclosure of the Invention

### Problems to be Solved by the Invention

According to Patent Document 1, although pages are automatically segmented by the photographic date, the pages are not segmented by the programs, such as foot race and a ball toss game, in an event within one day, such as an athletic meet.

According to Patent Document 2, an appropriate album cannot be created when the photographer wants to create, for example, an album for recording the child growth. It is desirable that an album recording the child growth is sorted by, for example, pages in order of photographed day/time and year/month so that the viewer can actually feel the child growth every time the viewer flips the page. In an album created by, for example, images photographed in a travel abroad, it is desirable that the images are sorted into pages according to the itinerary.

According to Patent Document 3, an effort is needed to perform both an image selection and a layout selection. In other words, since the creator of the album needs to determine the allocation of the images desirable for the photographer based on the content of the images, an effort is needed to create the album.

An object of the present invention is to create an impressive album without taking time or effort.

### Means for Solving the Problems

An album creating apparatus according to a first aspect of the present invention comprises: an input device for inputting images; a photographed date and time detection device for detecting photographed dates and times from auxiliary information of the images inputted to the input device; a range determination device for determining a photographed date range of the images based on the photographed dates and times detected by the photographed date and time detection device; a unit determination device for determining a selection unit of image and a posting page unit of an album corresponding to the selection unit of image based on the photographed date range determined by the range determination device; an image selection device for accepting a selection of images to be posted in the album for each selection unit determined by the unit determination device; and a creation device for creating album data, in which images of each selection unit that the image selection device has accepted the selection are arranged for each corresponding posting page unit, in accordance with templates corresponding to the number of images selected for each posting page unit.

The album creating apparatus according to the first aspect reads out photographed dates and times from the auxiliary information of the inputted images, determines the date range, and determines a posting page unit for posting images of each date. Images to be posted are selected for each date, more specifically each posting page unit according to an operation of the user, the selected images of each date are arranged for each corresponding posting page unit according to a predetermined layout, and the images are printed. The user only needs to select desired images to be posted for each posting page unit corresponding to each date; a complicated operation, such as designating an image layout of each page one by one, is not needed; and the time for the end user to create an album is reduced.

According to a second aspect, in the album creating apparatus according to the first aspect, the unit determination device may determines the selection unit of image and the posting page unit of album corresponding to the selection unit of image based on the number of days in which the number of days of dates without images is excluded from the total number of days of the photographed date range determined by the range determination device.

According to a third aspect, in the album creating apparatus according to the first or second aspect, the unit determination device may determines that the selection unit is arbitrary if the photographed date range is one day, determines that the selection unit is days if the photographed date range is two days or more and less than Ya days (Ya is an integer four or more and less than eight), determines that the selection unit is days or weeks if the photographed date range is Ya days or more and less than Yb days (Yb is an integer Ya or more and less than 15), determines that the selection unit is weeks if the photographed date range is Yb days or more and less than Yc weeks (Yc is an integer five or more), and determines that the selection unit is months if the photographed date range is Yc weeks or more and less than Yd months (Yd is an integer 12 or more).

An album creating apparatus according to a fourth aspect comprises: an album type selection device for accepting a selection of an album type; a unit determination device for determining a selection unit of image and a posting page unit of an album corresponding to the selection unit of image based on the album type that the album type selection device has accepted the selection; an image selection device for accepting a selection of images to be posted in the album for each selection unit determined by the selection unit determination device; and a creation device for creating album data, in which images of each selection unit that the image selection unit has accepted the selection are arranged for each corresponding posting page unit, in accordance with templates corresponding to the number of images selected for each posting page unit.

According to the album creating apparatus according to the fourth aspect, the type of album is determined in accordance with the operation of the user, and a selection unit of image and a posting page unit corresponding to the type of album are determined. The selected images of each posting page unit are arranged according to a predetermined layout and printed. The user only needs to select the type of album and desired images to be posted for each posting page unit; a complicated operation, such as designating an image layout of each page one by one, is not needed; and the time for the end user to create an album is reduced.

An album creating apparatus according to a fifth aspect comprises: an event designation accepting device for accepting a designation of desired events and an order of progress of the events; an allocation pages count accepting device for accepting a designation of the number of allocation pages of each event which the event designation accepting device has accepted the designation; an image selection device for accepting a selection of images to be posted in an album for each event that the event designation accepting device has accepted the designation in accordance with the order of progress of the events that the event designation accepting device has accepted the designation; and a creation device for creating album data, in which images of each event that the image selection device has accepted the selection are arranged for an allocation page of each corresponding event, in accordance with templates corresponding to the number of images selected for each event and the number of pages allocated for each event, wherein the image selection device displays an image with the last photographed date and time among selected images corresponding to a previous event in the order of progress of the events at the top of a list of selectable images corresponding to a next event in the order of progress of the events, or displays an image with photographed date and time immediately after the image of the last photographed date and time among the selected images corresponding to the previous event at the top of the list of selectable images corresponding to the next event, and then accepts a selection of desired images from the list of selectable images corresponding to the next event.

According to the fifth aspect, events to be posted in the album, the number of allocated pages of each event, and the posting images of each event are determined according to the operation of the user, and the selected images of each event are arranged in corresponding pages according to a predetermined layout and printed. The user only needs to designate events and the order of progress of the events, designate the number of allocated pages of each event, and select desired images to be posted in the pages corresponding to each event; complicated operation, such as designating an image layout of each page one by one, is not needed; and the time for the end user to create an album is reduced.

Furthermore, since an image of the last photographed date and time among the selected images corresponding to the previous event or an image of the next photographed date and time is displayed at the top of the list of selectable images corresponding to the next event, the context of the events can be well recognized, and the allocation of the same image again to a different event can be prevented.

According to a sixth aspect, the album creating apparatus according to any one of the first to third aspects further comprises a preliminary sorting designating device for accepting a designation of whether the images inputted to the input device is sorted in advance as images to be posted in the album, wherein the range determination device accepts a designation of a selection range of images to be posted in the album and determines the photographed date range of the images in the designated selection range if a designation is made, the designation indicating the fact that an image not sorted in advance in the preliminary sorting designation device is inputted.

According to a seventh aspect, in the album creating apparatus according to any one of the first and third to sixth aspects, the unit determination device may determines a posting page unit corresponding to the selection unit with one or more images.

In either case, images can be selected for each posting page unit, and the selection of images is facilitated.

According to an eighth aspect, in the album creating apparatus according to any one of the first, second, third, and fifth to seventh aspects, the unit determination device may determines the posting page unit of album corresponding to the selection unit of image as one page or a plurality of pages.

An album creating method according to a ninth aspect of the present invention comprises: a step of inputting images; a step of detecting photographed dates and times from auxiliary information of the inputted images; a step of determining a photographed date range of the images based on the detected photographed dates and times; a step of determining a selection unit of image and a posting page unit of an album corresponding to the selection unit of image based on the determined photographed date range; a step of accepting a selection of images to be posted in an album for each of the determined selection units; and a step of creating album data, in which images of each selection unit accepted with the selection are arranged for each corresponding posting page unit, in accordance with templates corresponding to the number of images selected for each posting page unit.

An album creating method according to a tenth aspect comprises: a step of accepting a selection of an album type; a step of determining a selection unit of image and a posting page unit of an album corresponding to the selection unit of image based on the album type accepted with the selection; a step of accepting a selection of images to be posted in the album for each of the determined selection units; and a step of creating album data, in which images of each selection unit accepted with the selection are arranged for each corresponding posting page unit, in accordance with templates corresponding to the number of images selected for each posting page unit.

An album creating method according to an eleventh aspect comprises: a step of accepting a designation of desired events and an order of progress of the events; a step of accepting a designation of the number of allocation pages of each event accepted with the designation; a step of accepting a selection of images to be posted in an album for each event accepted with the designation in accordance with the order of progress of the events accepted with the designation; a step of displaying an image with the last photographed date and time among selected images corresponding to a previous event in the order of progress of the events at the top of a list of selectable images corresponding to a next event in the order of progress of the events, or displaying an image with photographed date and time immediately after the image of the last photographed date and time among the selected images corresponding to the previous event at the top of the list of selectable images corresponding to the next event, and then accepting a selection of desired images from the list of selectable images corresponding to the next event; and a step of creating album data, in which images of each event accepted with the selection are arranged for an allocation page of each corresponding event, in accordance with templates corresponding to the number of images selected for each event and the number of pages allocated for each event.

A program causing a computer to execute the album creating method according to any one of the ninth to eleventh aspects is also included in the present invention.

### Advantage of the Invention

According to the present invention, the user does not have to perform a complicated operation, such as designating an image layout of each page one by one, and the time for the end user to create an album is reduced.

### Brief Description of the Drawings

Figure 1 is a block diagram of an album creating apparatus;
Figure 2 is a flowchart of an album creation process;
Figure 3 is a diagram showing a display example of an album type selection screen;
Figure 4 is a flowchart of an album creation process of travel abroad;
Figure 5 explains a state of thumbnail selection in the album creation process of travel abroad, (A) is a diagram showing a thumbnail example of images of a first day (first page) of a date range, (B) is a diagram showing a thumbnail example of a second day (second page), (C) is a diagram showing a thumbnail example of a third day (third page), (D) is a diagram showing a thumbnail example of a fourth day (fourth page), and (E) is a diagram showing a thumbnail example of a fifth day (fifth page);
Figure 6 shows an example of an album obtained by the album creation process of travel abroad, (A) is a diagram showing an example of first and second pages of the album, (B) is a diagram showing an example of third and fourth pages of the album, and (C) is a diagram showing an example of a fifth page of the album;
Figure 7 is a flowchart of an album creation process of child growth record;
Figure 8 explains a state of thumbnail selection in the album creation process of child growth record, (A) is a diagram showing a thumbnail example of an image in a page of a first month, and (B) is a diagram showing a thumbnail example of images in a page of a twelfth month;
Figure 9 shows an example of an album obtained in an overseas album creation process, (A) is a diagram showing an example of a first page, and (B) is a diagram showing an example of a twelfth page;
Figure 10 is a flowchart of an album creation process of athletic meet;
Figure 11 is a diagram showing a display example of an event selection screen;
Figure 12 explains a state of thumbnail selection in the album creation process of athletic meet, (A) is a diagram showing a thumbnail example of an image in a page of "Opening Ceremony", (B) is a diagram showing a thumbnail example of images in a page of "Foot Race", (C) is a diagram showing a thumbnail example of an image in a page of "Lunch Time", (D) is a diagram showing a thumbnail example of an image in a page of "Dancing", and (E) is a diagram showing a thumbnail example of an image in a page of "Tug of War"; and
Figure 13 shows an example of an album obtained by the album creation process of athletic meet, (A) is a diagram showing an example of first and second pages of the album, (B) is a diagram showing an example of third and fourth pages of the album, and (C) is a diagram showing an example of fifth and sixth pages of the album.
Description of Symbols
- 11: image input unit
- 12: operation unit
- 13: print output unit
- 14: fee payment unit
- 15: display unit
- 16: storage unit
- 17: processing unit

### Best Mode for Carrying Out the Invention

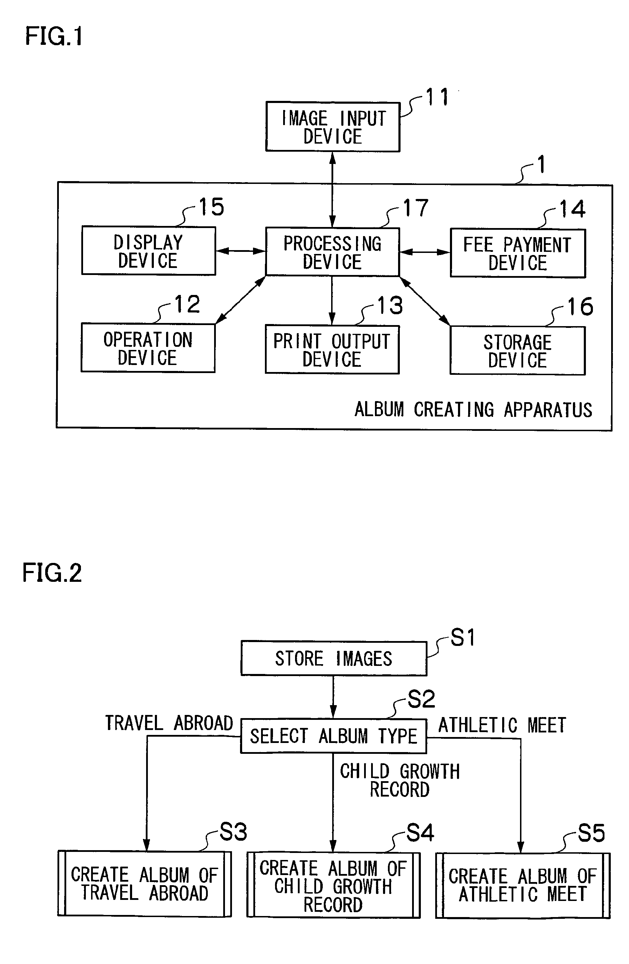

Figure 1 is a block diagram showing a configuration of an album creating apparatus 1 according to a preferred embodiment of the present invention. The album creating apparatus 1 includes: an image input device 11 for inputting image data from an image reading apparatus which reads images from various recording media such as smart media (Solid-State Flexible Disk Card), PC card, Compact Flash (registered trademark), magnetic disk, optical disk, magneto optical disk, and memory stick; an operation device 12 which is constituted by an operation button, a touch panel, and the like and accepts operations and inputs from the user; a print output device 13 which prints and outputs a print material constituting the pages of an album; a fee payment device 14 for paying a print fee; a display device 15 which is constituted by a liquid crystal display laminated with a touch panel and the like; a storage device 16 in which data and programs necessary to create album data and auxiliary images of frames and the like are stored; and a processing device 17 which controls the components and executes various data processes.

The display device 15 performs display according to an instruction from the processing device 17. The user inputs setting items, such as selection of images to be printed, from the operation device 12 through a graphical user interface (GUI) displayed on the display device 15. Hereinafter, the setting items inputted from the operation device 12 will be referred to as order information. The storage device 16 stores a price per piece of printed sheet.

The processing device 17 generates data for creating an album according to the image data and the order information. The data for creating an album is transmitted to the print output device 13, and the print output device 13 executes a printing operation to output a print material. The printing system is not particularly limited, and various systems are possible, such as a thermo autochrome (TA) system in which the printing paper develops colors by heat, and an inkjet system in which a nozzle sprays ink drops on printing paper. The fee payment device 14 may be omitted.

In the image data inputted to the image input device 11, a variety of auxiliary information, such as image name, photographed date and time, photographic conditions (such as photographic light source, distance to subject, state of flash emission, shutter speed, and photographed location), and maker name of camera, is recorded in the tag of header part, and the main images are recorded in the data part, and the image data is constituted by, for example, an Exif (Exchangeable Image File Format) file.

Hereinafter, a flow of an album creation process executed by the album creating apparatus 1 will be described with reference to a flowchart of Figure 2.

In S1, a message prompting to set a recording medium to the image input device 11 is displayed on the display device 15 to prompt the insertion of the recording medium. Image data is read out from the set recording medium and stored in the storage device 16.

In S2, in response to an instruction from the operation device 12 to start album printing, a screen for selecting an event type recorded in the images, which are sources of the album, is displayed on the display device 15 to make the user select an arbitrary event type through the operation device 12.

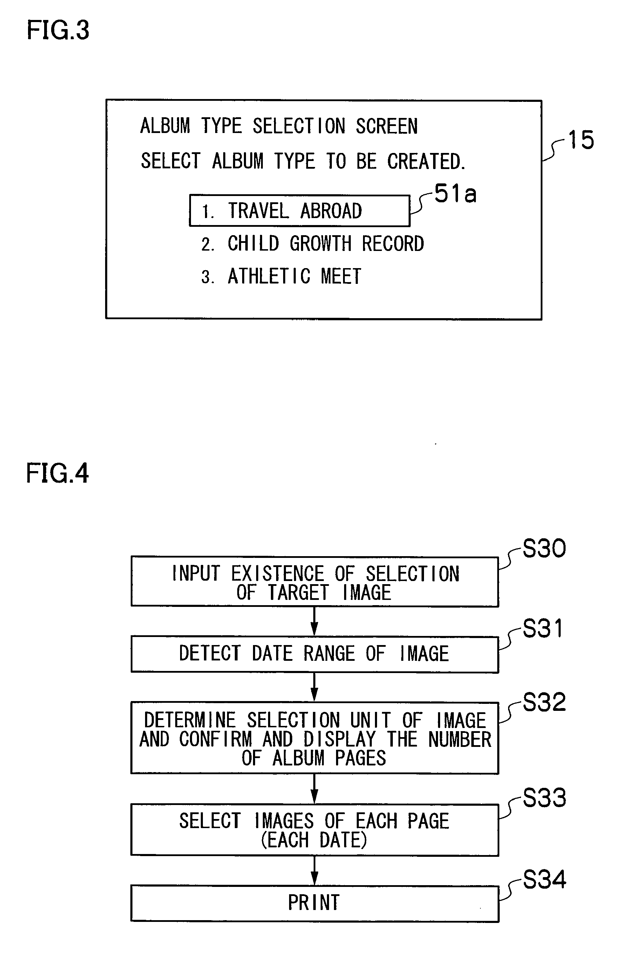

In the example herein, as shown in Figure 3, "Travel Abroad", "Child Growth Record", and "Athletic Meet" are displayed as selectable event types on the display device 15. A cursor 51a is provided to the event type selected from the operation device 12. In this case, "Travel Abroad" is selected.

The processing device 17 discriminates the selected event type and moves to S3 if "Travel Abroad" is selected as the event type, moves to S4 if "Child Growth Record" is selected, and moves to S5 if "Athletic Meet" is selected.

### S3 to S5 denote an album creation subroutine of travel abroad, an album creation subroutine of child growth record, and an album creation subroutine of athletic meet, respectively.

The album creation subroutine of travel abroad will be described first in accordance with a flowchart of Figure 4.

In S30, a designation is accepted from the operation device 12, the designation indicating whether an image inputted to the image input device 11 is sorted in advance as an image to be printed in the album. If it is designated that an image sorted in advance is inputted, the process proceeds to S31.

If it is designated that an image not sorted in advance is inputted, a screen for sorting images is displayed, an image to be printed is selected from the screen, and the process proceeds to S31. It is cumbersome to display all images on the screen for sorting images, and therefore, the range of display can be limited in advance by the photographed date and time or the like.

In S31, the photographed date and time is read out from the auxiliary information of the inputted images (or images sorted for printing). The date range of the photographed date and time is then determined.

In S32, a selection unit of images is determined according to the date range determined in S31.

Specifically, assuming that the date range is X,

if X=1 day, the selection unit is free (arbitrary).

If X=2 days or more and less than Ya days (Ya is an integer, and is four or more and less than eight, and for example, Ya=7), the selection unit is days.

If X=Ya days or more and less than Yb days (for example, Yb is an integer Ya or more and less than 15, and for example, Yb=14), the selection unit is days or weeks. The user is made to arbitrarily select one of the days and weeks.

If X=Yb days or more and less than Yc weeks (Yc is an integer five or more, and for example Yc=5), the selection unit is weeks.

If X=Yc weeks or more and less than Yd months (Yd is an integer 12 or more, and for example, Yd=12), the selection unit is months.

For example, if the date range is determined from images taken in a travel abroad of net five days, the selection unit of the images is determined as "days".

The number of pages of the album corresponding to the image selection unit is then determined. For example, if the selection unit of image is "days" and the date range is "five days", the number of pages is five.

However, if there are dates without any image in the dates belonging to the date range, the number of days of the dates is excluded to determine the number of pages. For example, if the date range of five days is determined but there is no image of the date of the second day, the number of pages is determined to be four pages.

In S33, thumbnails of images with proper photographed dates are sorted by the image selection unit "days" and displayed on the display device 15, and from the thumbnails sorted by the image selection unit "days", thumbnails of arbitrary images to be arranged in each page unit corresponding to the image selection unit are caused to be selected.

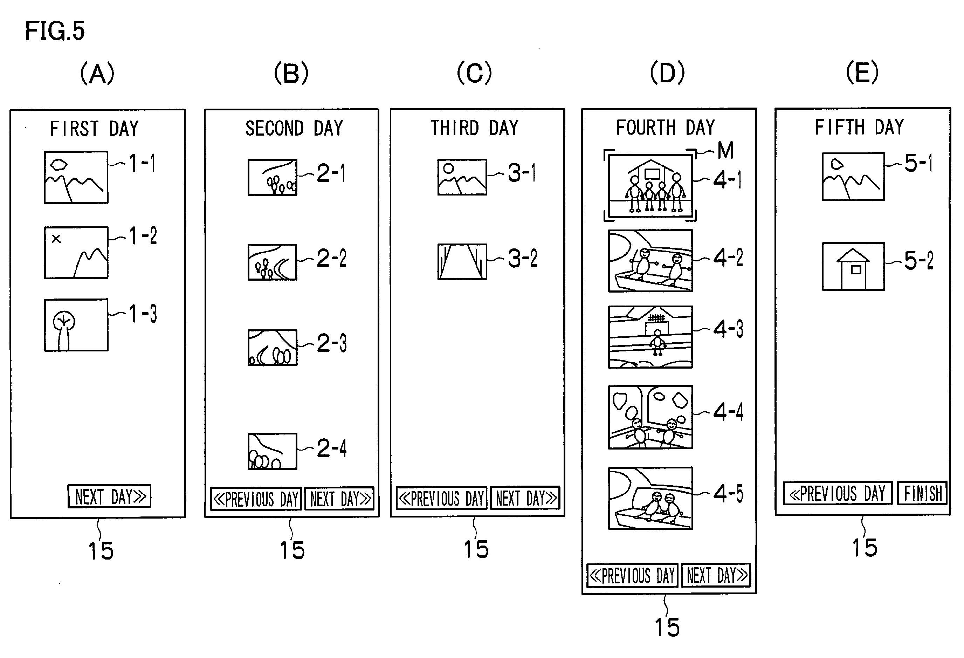

For example, thumbnails of images of the first day (first page) of the date range are displayed in (A) of Figure 5, thumbnails of the second day (second page) are displayed in (B) of Figure 5, thumbnails of the third day (third page) are displayed in (C) of Figure 5, thumbnails of fourth day (fourth page) are displayed in (D) of Figure 5, and thumbnails of fifth day (fifth page) are displayed in (E) of Figure 5. Although images of one day are assembled and arranged in a predetermined number of page unit, the predetermined number of page unit may be one page or a plurality of pages.

The arrangement to the unit page of images of one day is defined by template data stored in advance in the storage device 16. For example, the template data defines that when the number of unit pages for assembling the images of one day is one page, vertical 2 x horizontal 1 images are arranged in a lattice pattern if the number of images of one day is two, vertical 3 x horizontal 1 images are arranged in a lattice pattern if the number of images is three, vertical 2 x horizontal 2 images are arranged in a lattice pattern if the number of images is four, and one image is arranged at the center and one image is arranged at each of the four corners if the number of images is five.

The user selects, from the displayed thumbnails, thumbnails of images to be posted in the album by the operation device 12. To delete images that are once selected, the selected images are again designated to release the selection. When the thumbnail selection of each day (each page) is completed, touching and selecting a "To the Next Day" button can finish the thumbnail selection of the currently displayed day (page) to advance to the thumbnail selection of the next day (page). Touching and selecting a "To the Previous Day" button allows returning to the thumbnail selection of the previous day (page). Since the selection unit of images corresponds to the pages and photographed dates of album, the selection unit of image is clear, and the selection is simple.

If there is an image to be particularly processed or emphasized, such as expansion, contraction, frame combining, trimming, and rotation, among the selected images, touching and selecting a "Process" menu causes a screen for selecting a processing method to be popped up and displayed. When a desired processing method is selected on the screen and an image to be processed is selected, a marker M is provided to the thumbnail, and the desired process selected for the present image corresponding to the thumbnail is applied in a subsequent album data creation.

In S34, the processing device 17 stores images, which are designated by thumbnails, of each date in the storage device 16 in response to the pressing of a "Finish" button. Album data for arranging and printing the designated images of each date by the page unit is created and outputted to the print output device 13. The print output device 13 prints each page of the album based on the album data. The printed pages of the album are bound up accordingly and handed over to the user.

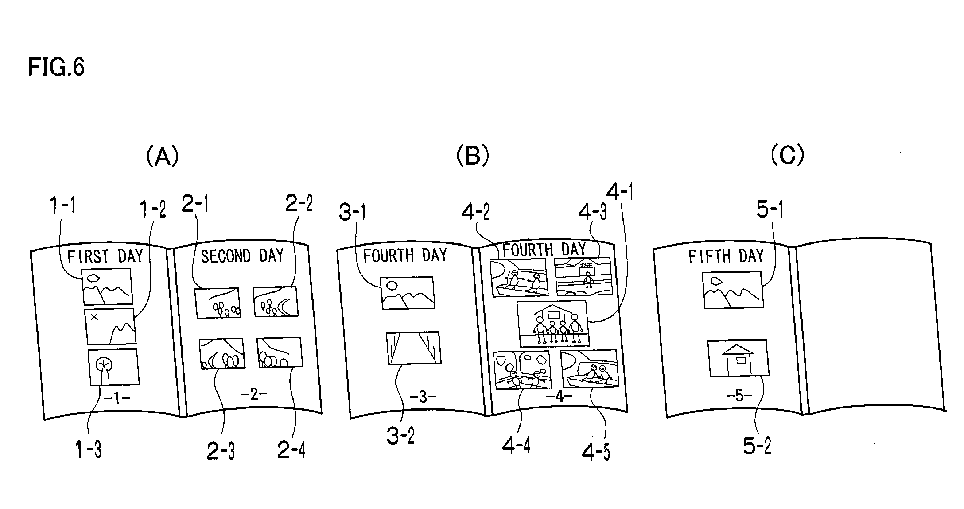

Figure 6 is an example of a completed "Travel Abroad" album. As shown in (A) of Figure 6, vertical 2 x horizontal 1 present images (the same reference numerals as the thumbnail images are attached to simplify the description) corresponding to thumbnail images 1-1 to 1-3 are arranged in a lattice pattern in the first page, and vertical 2 x horizontal 2 present images corresponding to thumbnail images 2-1 to 2-4 are arranged in a lattice pattern in the second page. As shown in (B) of Figure 6, vertical 2 x horizontal 1 present images corresponding to thumbnails 3-1 and 3-2 are arranged in a lattice pattern in the third page, a present image corresponding to a thumbnail image 4-1 provided with the marker M is arranged at the center in a main image size, and present images corresponding to thumbnail images 4-2 to 4-5 are arranged at the four corners of the page, one for each, in a sub-image size, in the fourth page. The main image size and the sub-image size have a difference in size to the extent that allows discrimination of whether the images are primary or secondary. As shown in (C) of Figure 6, vertical 2 x horizontal 1 present images corresponding to thumbnail images 5-1 to 5-2 are arranged in a lattice pattern in the fifth page. Serial numbers "First Day", "Second Day", ..., "Fifth Day" according to the image selection unit and the page numbers are described in the pages, and an image of which day is posted in which page is apparent, and the day-by-day itinerary can be well recognized. In this way, the album creating apparatus 1 can create a user-friendly "Travel Abroad" album without imposing a complicated operation on the user.

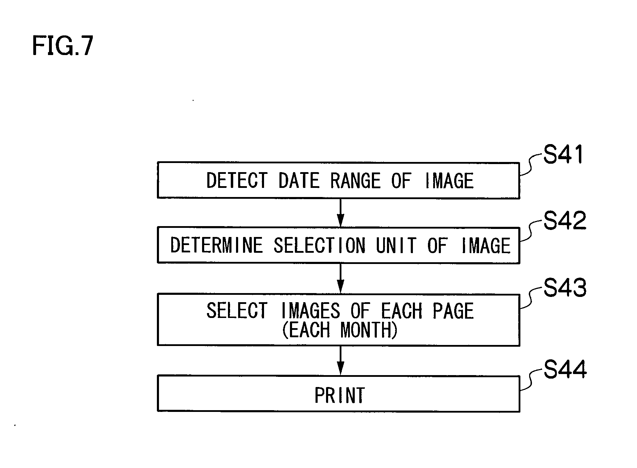

Next, an album creation subroutine of child growth record will be described in accordance with a flowchart of Figure 7.

In S41, the photographed date and time is read out from the auxiliary information of the inputted images (or images sorted for printing). The date range of the photographed date and time is then determined. In this case, it is assumed that the date range of one year is determined.

In S42, a selection unit of images corresponding to the date range determined in S41 is determined. In this case, based on the standard as in S32, a selection unit "months" of images corresponding to the date range of one year is determined. A page unit corresponding to each image selection unit is then allocated. In this case, one page is allocated to each month. A plurality of pages may be allocated to each month.

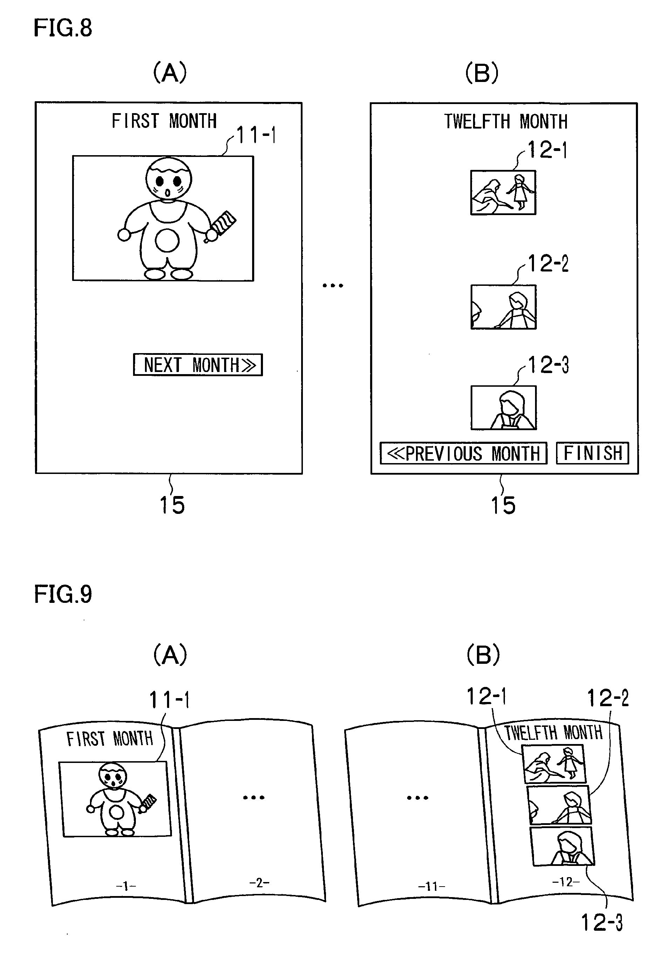

In S43, a selection of images to be posted in pages corresponding to each image selection unit, each month herein, is accepted. More specifically, as shown in Figure 8, thumbnails of the images are sorted by "months" of the photographed date and time, such as "First Month", ..., and "Twelfth Month", and from the thumbnails, desired thumbnails of images to be posted in the pages corresponding to each month are selected. Since the selection unit of images corresponds to pages of album and the photographed month, the selection unit of image is clear, and the selection is simple.

In this case, it is assumed that an image 11-1 is selected as a thumbnail of an image to be posted in the page of "First Month", and images 12-1 to 12-3 are selected as thumbnails of images to be posted in the page of "Twelfth Month".

In S44, as in S34, images of each month designated by thumbnails are stored in the storage device 16 in accordance with the pressing of the "Finish" button. Album data for arranging and printing the designated images of each month by the unit page of album is created and outputted to the print output device 13. The print output device 13 prints each page of the album based on the album data. The printed pages of the album are bound up accordingly and handed over to the user.

Figure 9 is an example of a completed "Child Growth Record" album. As shown in (A) of Figure 9, a present image corresponding to the thumbnail image 11-1 of the first month is arranged at the center of the first page. As shown in (B) of Figure 9, vertical 3 x horizontal 1 present images (the same reference numerals as the thumbnails are provided for convenience of description) corresponding to the thumbnail images 12-1 to 12-3 of the twelfth month are arranged in a lattice pattern in the twelfth page. Serial numbers "First Month", ..., and "Twelfth Month" according to the image selection unit and the page numbers are described in the pages, therefore, an image of which month is posted in which page is apparent, and the month-by-month child growth procedure can be well recognized. In this way, the album creating apparatus 1 can create a user-friendly "Child Growth Record" album without imposing a complicated operation on the user.

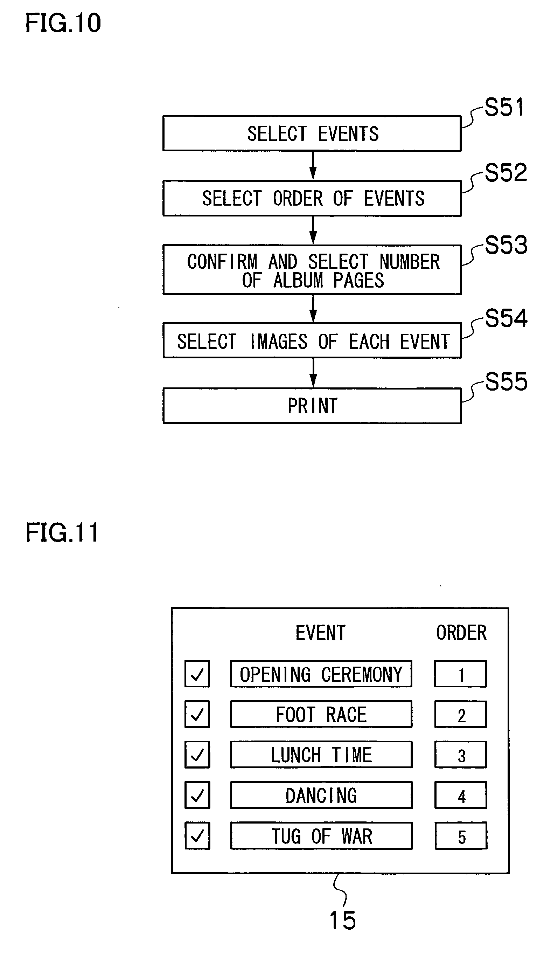

Next, an album creation subroutine of athletic meet will be described in accordance with a flowchart of Figure 10.

In S51, a designation of events, which are photographed as images, in an athletic meet to be posted in the album is accepted. For example, as shown in Figure 11, among prepared event genres "Opening Ceremony", "Foot Race", "Lunch Time", "Dancing", and "Tug of War", a desired event genre is made designated from the operation device 12. The specific mode for designating the event is arbitrary. For example, the user can arbitrarily input the name of an event.

In S52, a designation of an order of progress of the designated events of the athletic meet is accepted. For example, if the athletic meet has progressed in order of "Opening Ceremony", "Foot Race", "Lunch Time", "Dancing", and "Tug of War", the opening ceremony can be designated to "1", the foot race can be designated to "2", the lunch time can be designated to "3", the dancing can be designated to "4", and the tug of war can be designated to "5".

In S53, a designation of the number of pages to be allocated to each of the designated events is accepted. First, one page is allocated to each event as a default number of pages, and a confirmation input of whether the allocation is fine is accepted, then if consent is inputted, the default number of pages is confirmed, and if consent is not inputted, an arbitrary number of pages is allocated to each event.

For example, if five events of "Opening Ceremony", "Foot Race", "Lunch Time", "Dancing", and "Tug of War" are designated, the default number of pages is five. Next, an input of whether to agree to confirm the number of pages is prompted with a message such as "Is it OK that the number of pages is five?" Hereinafter, for convenience of description, it is assumed that the consent is not inputted, two pages are allocated to "Foot Race", and one page is allocated to other events.

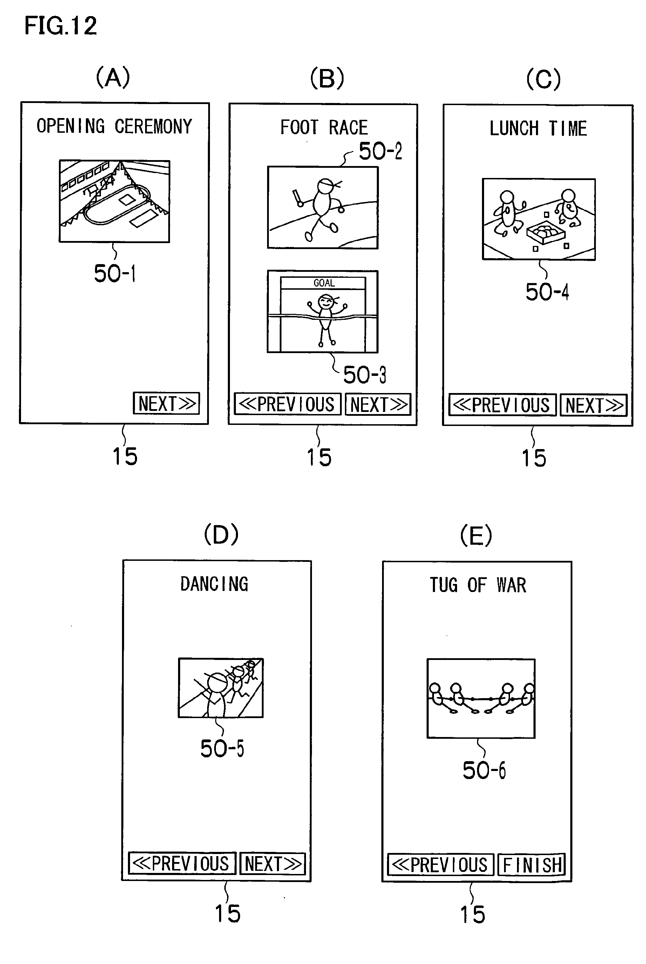

In S54, a selection of images corresponding to each event to be posted in the album is accepted. More specifically, as shown in Figure 12, thumbnails of images are displayed as a list in order of photographed date and time, the earliest time on the top, and from the thumbnails, desired thumbnails of images to be posted corresponding to the events are selected. Since images can be selected according to specific events, the selection of images is easy.

The user needs to select images of each event depending on the photographed date and time, therefore, when a large number of images are handled, the user may not recognize the context, such as which image is allocated to which event, and the same image may be allocated again to a different event. Thus, among the image thumbnails allocated to the previous event, the thumbnail of the last photographed date and time can be displayed at the top of the list of image thumbnails which can be allocated to the next event. Alternatively, among the image thumbnails allocated to the previous event, an image of the photographed date and time immediately after the last photographed date and time can be displayed at the top of the list of the image thumbnails which can be allocated to the next event.

In this case, it is assumed that an image 50-1 is selected as a thumbnail of an image posted in the page of "Opening Ceremony" as shown in (A) of Figure 12, images 50-2 and 50-3 are selected as thumbnails of images to be posted in the page of "Foot Race" as shown in (B) of Figure 12, an image 50-4 is selected as a thumbnail of an image to be posted in the page of "Lunch Time" as shown in (C) of Figure 12, an image 50-5 is selected as a thumbnail of an image to be posted in the page of "dancing" as shown in (D) of Figure 12, and an image 50-6 is selected as a thumbnail of an image to be posted in the page of "Tug of War" as shown in (E) of Figure 12.

If the number of selected images is smaller than the number of pages corresponding to a certain event, a message can be displayed. For example, if only one thumbnail is selected though two pages are allocated to the foot race, a message such as "Select two or more images as there are two pages." can be displayed. How many images need to be selected for the events can be displayed from the beginning, and for example, a message such as "Select one image for dancing" can be displayed. Additionally, if no posting image corresponding to an event is selected though the event is designated, a page may not be allocated to the event.

In S55, in response to the pressing of the "Finish" button, images of each event designated by thumbnails are stored in the storage device 16. Album data for arranging and printing the images of each event by the page unit of album is created and outputted to the print output device 13. The print output device 13 prints each page of the album based on the album data. The printed pages of the album are bound up accordingly and handed over to the user.

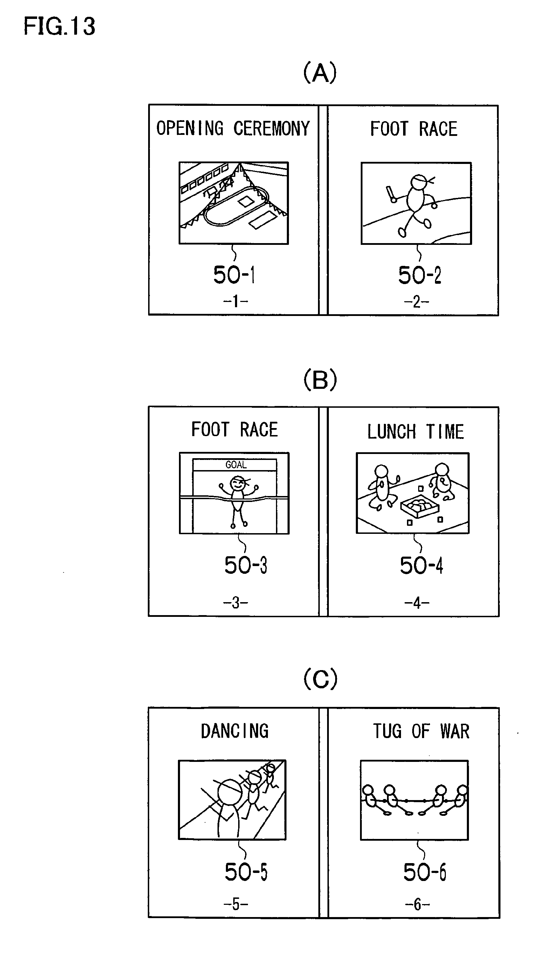

Figure 13 is an example of a completed "Athletic Meet" album. As shown in (A) of Figure 13, a present image (the same reference numerals as the thumbnails are provided for convenience of description) corresponding to the thumbnail image 50-1 is arranged at the center of the page (first page) of the opening ceremony, and a present image corresponding to the thumbnail 50-2 is arranged at the center of the first page of the foot race (second page). As shown in (B) of Figure 13, a present image corresponding to the thumbnail image 50-3 is arranged at the center of the second page of the foot race (third page), and a present image corresponding to the thumbnail 50-4 is arranged at the center of the page of the lunch time (fourth page). As shown in (C) of Figure 13, a present image corresponding to the thumbnail image 50-5 is arranged at the center of the page of the dancing (fifth page), and a present image corresponding to the thumbnail image 50-6 is arranged at the center of the page of the tug of war (sixth page). The event names "Opening Ceremony", "Foot Race", "Lunch Time", "Dancing", and "Tug of War" in the athletic meet as well as the number of pages are described in the pages, and the scenes of which events are photographed in which pages can be chronologically recognized. In this way, the album creating apparatus 1 can create a user-friendly "Athletic Meet" album without imposing a complicated operation on the user.

As described, the album creating apparatus 1 reads out the photographed date and time from the auxiliary information of the inputted images and determines the date range to determine the unit of page for posting images of each date. Images of each date, that is, images to be posted in each unit page, are selected according to the operation of the user, the selected images of each date are arranged in corresponding unit pages according to a predetermined layout, and are printed. The user only needs to select desired images to be posted in each unit page corresponding to each date, and a complicated operation, such as designating an image layout of each page one by one, is not needed, and the time for the end user to create an album is reduced.

The album creating apparatus 1 determines events to be posted in the album, the number of allocated pages of each event, and posting images of each event in accordance with the operation of the user and arranges and prints the selected images of each event on corresponding pages according to a predetermined layout. The user only needs to select desired images posted in the pages corresponding to each event, and a complicated operation, such as designating an image layout of each page one by one, is not needed, and the time for the end user to create an album is reduced.

## Claims

1. An album creating apparatus comprising:
an input device for inputting images;
a photographed date and time detection device for detecting photographed dates and times from auxiliary information of the images inputted to the input device;
a range determination device for determining a photographed date range of the images based on the photographed dates and times detected by the photographed date and time detection device;
a unit determination device for determining a selection unit of image and a posting page unit of an album corresponding to the selection unit of image based on the photographed date range determined by the range determination device;
an image selection device for accepting a selection of images to be posted in the album for each selection unit determined by the unit determination device; and
a creation device for creating album data, in which images of each selection unit that the image selection device has accepted the selection are arranged for each corresponding posting page unit, in accordance with templates corresponding to the number of images selected for each posting page unit.

2. The album creating apparatus according to claim 1, wherein
the unit determination device determines the selection unit of image and the posting page unit of album corresponding to the selection unit of image based on the number of days in which the number of days of dates without images is excluded from the total number of days of the photographed date range determined by the range determination device.

3. The album creating apparatus according to claim 1 or 2, wherein
the unit determination device determines that the selection unit is arbitrary if the photographed date range is one day, determines that the selection unit is days if the photographed date range is two days or more and less than Ya days (Ya is an integer four or more and less than eight), determines that the selection unit is days or weeks if the photographed date range is Ya days or more and less than Yb days (Yb is an integer Ya or more and less than 15), determines that the selection unit is weeks if the photographed date range is Yb days or more and less than Yc weeks (Yc is an integer five or more), and determines that the selection unit is months if the photographed date range is Yc weeks or more and less than Yd months (Yd is an integer 12 or more).

4. An album creating apparatus comprising:
an album type selection device for accepting a selection of an album type;
a unit determination device for determining a selection unit of image and a posting page unit of an album corresponding to the selection unit of image based on the album type that the album type selection device has accepted the selection;
an image selection device for accepting a selection of images to be posted in the album for each selection unit determined by the selection unit determination device; and
a creation device for creating album data, in which images of each selection unit that the image selection unit has accepted the selection are arranged for each corresponding posting page unit, in accordance with templates corresponding to the number of images selected for each posting page unit.

5. An album creating apparatus comprising:
an event designation accepting device for accepting a designation of desired events and an order of progress of the events;
an allocation pages count accepting device for accepting a designation of the number of allocation pages of each event which the event designation accepting device has accepted the designation;
an image selection device for accepting a selection of images to be posted in an album for each event that the event designation accepting device has accepted the designation in accordance with the order of progress of the events that the event designation accepting device has accepted the designation; and
a creation device for creating album data, in which images of each event that the image selection device has accepted the selection are arranged for an allocation page of each corresponding event, in accordance with templates corresponding to the number of images selected for each event and the number of pages allocated for each event,
wherein the image selection device displays an image with the last photographed date and time among selected images corresponding to a previous event in the order of progress of the events at the top of a list of selectable images corresponding to a next event in the order of progress of the events, or displays an image with photographed date and time immediately after the image of the last photographed date and time among the selected images corresponding to the previous event at the top of the list of selectable images corresponding to the next event, and then accepts a selection of desired images from the list of selectable images corresponding to the next event.

6. The album creating apparatus according to any one of claims 1 to 3, further comprising
a preliminary sorting designating device for accepting a designation of whether the images inputted to the input device is sorted in advance as images to be posted in the album,
wherein the range determination device accepts a designation of a selection range of images to be posted in the album and determines the photographed date range of the images in the designated selection range if a designation is made, the designation indicating the fact that an image not sorted in advance in the preliminary sorting designation device is inputted.

7. The album creating apparatus according to any one of claims 1 and 3 to 6,
wherein the unit determination device determines a posting page unit corresponding to the selection unit with one or more images.

8. The album creating apparatus according to any one of claims 1, 2, 3, and 5 to 7,
wherein the unit determination device determines the posting page unit of album corresponding to the selection unit of image as one page or a plurality of pages.

9. An album creating method comprising:
a step of inputting images;
a step of detecting photographed dates and times from auxiliary information of the inputted images;
a step of determining a photographed date range of the images based on the detected photographed dates and times;
a step of determining a selection unit of image and a posting page unit of an album corresponding to the selection unit of image based on the determined photographed date range;
a step of accepting a selection of images to be posted in an album for each of the determined selection units; and
a step of creating album data, in which images of each selection unit accepted with the selection are arranged for each corresponding posting page unit, in accordance with templates corresponding to the number of images selected for each posting page unit.

10. An album creating method comprising:
a step of accepting a selection of an album type;
a step of determining a selection unit of image and a posting page unit of an album corresponding to the selection unit of image based on the album type accepted with the selection;
a step of accepting a selection of images to be posted in the album for each of the determined selection units; and
a step of creating album data, in which images of each selection unit accepted with the selection are arranged for each corresponding posting page unit, in accordance with templates corresponding to the number of images selected for each posting page unit.

11. An album creating method comprising:
a step of accepting a designation of desired events and an order of progress of the events;
a step of accepting a designation of the number of allocation pages of each event accepted with the designation;
a step of accepting a selection of images to be posted in an album for each event accepted with the designation in accordance with the order of progress of the events accepted with the designation;
a step of displaying an image with the last photographed date and time among selected images corresponding to a previous event in the order of progress of the events at the top of a list of selectable images corresponding to a next event in the order of progress of the events, or displaying an image with photographed date and time immediately after the image of the last photographed date and time among the selected images corresponding to the previous event at the top of the list of selectable images corresponding to the next event, and then accepting a selection of desired images from the list of selectable images corresponding to the next event; and
a step of creating album data, in which images of each event accepted with the selection are arranged for an allocation page of each corresponding event, in accordance with templates corresponding to the number of images selected for each event and the number of pages allocated for each event.

12. A program causing a computer to execute the album creating method according to any one of claims 9 to 11.
